(19) Europäisches Patentamt / European Patent Office / Office européen des brevets

(11) **EP 2 960 154 A1**

(12) **EUROPEAN PATENT APPLICATION**

(43) Date of publication:
30.12.2015 Bulletin 2015/53

(51) Int Cl.:
*B64C 27/08* (2006.01)    *G05D 1/00* (2006.01)
*G05D 1/08* (2006.01)    *G05D 1/10* (2006.01)

(21) Application number: 14305973.1

(22) Date of filing: 23.06.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Thomson Licensing
92130 Issy-les-Moulineaux (FR)

(72) Inventors:
• Fleureau, Julien
35576 Cesson Sevigne (FR)

• Tariolle, Francois-Louis
35576 Cesson Sevigne (FR)
• Kerbiriou, Paul
35576 Cesson Sevigne (FR)
• Le Clerc, Francois
35576 Cesson Sevigne (FR)

(74) Representative: Huchet, Anne
Technicolor
1-5 rue Jeanne d'Arc
92130 Issy-Les-Moulineaux (FR)

(54) **A method for controlling a path of a rotary-wing drone, a corresponding system, a rotary-wing drone implementing this system and the related uses of such a drone**

(57)    A method for controlling a path of a rotary-wing drone 1, characterized in that said method comprises steps for:
• Establishing a first-order temporal relation between flight control parameters and flight dynamics for said rotary-wing drone 1 comprising:
o An Explicit Discrete Time-Variant State-Space Representation of a translation control of said rotary-wing drone 1;
o An Explicit Discrete Time-Variant State-Space Representation of a course control of said rotary-wing drone 1;

• Controlling the path of said rotary-wing drone 1 by:
o Estimating a course 17 of said rotary-wing drone 1 on the basis of said Explicit Discrete Time-Variant State-Space Representation of a course control of said rotary-wing drone 1;
o Estimating a position 18 of said rotary-wing drone 1 on the basis of said Explicit Discrete Time-Variant State-Space Representation of a translation control of said rotary-wing drone 1;
said steps of estimating being performed independently.

Figure 2

**Description**

**1 Technical Field**

The present invention relates generally to the field of methods and systems for controlling rotary-wing drones.

**2. Background Art**

With the development of robotics and aeronautics, drones (also known as Unmanned Aerial Vehicle) are now more and more integrated and easy to control, even in non-military context. Many applications making use of such devices may be now found in the civil life as, for instance, surveillance, video recording or even gaming.

Several kinds of drones exist including: fixed-wing drones (plane-like), rotary-wing drones (helicopter-like) and flapping-wing drones (hummingbird-like). Due to the good trade-off between the payload, control and price that they offer, rotary-wing drones are the most developed drones on the civil market. For instance, some rotary-wing drones being controllable from a remote tablet are now available for sale to non-professional consumers. Such kinds of drones are able to embed a video camera and broadcast the data over a wireless network.

However, despite the new possibilities offered by such kind of drone to ease its control, one trained human is often still required to pilot the drone as well as another person to control the embedded camera in case of simultaneous video-recording. In addition, controlling the drone in terms of position, speed and acceleration as well as in terms of orientation in a very accurate way may be not possible, even for a well-trained pilot. Such level of control may be especially required when a drone is navigating close to moving persons, or in interior conditions with a lot of tridimensional obstacles.

In order to ease the understanding of the issues met by a person operating manually a rotary-wing drone, some basic notions of flight dynamics are briefly described here after. A rotary-wing drone only relies on its rotors to move in space and it is therefore by changing the rotation speed and/or the angular inclination of the same rotors that an operator is controlling the drone. On a dynamic point of view, all the motions performed by the drone can be resumed by the variation of four parameters, also called flight controls: the pitch angle, the roll angle, the yaw speed and the elevation speed. More precisely:

- A pitch angle variation makes the drone going forward (negative pitch) or backward (positive pitch),
- A roll angle variation makes the drone going left (negative roll) or right (positive roll),
- A yaw speed variation makes the drone turning around the vertical axis in a counter-clockwise (negative yaw speed) or clockwise way (positive yaw speed),
- An elevation speed makes the drone going up (positive elevation speed) or down (negative elevation speed), more or less quickly.

It is therefore by continuously adapting these four flight controls that the operator defines a 6-dimensions-path (3 translations and 3 rotations) to be followed by the drone. One can easily understand the difficulties that may be encountered by an operator to control a drone in both adapting continuously these four parameters and taking into account the position of the drone, its instantaneous speed, orientation, as well as the constraints imposed by its dimensions and its environment (wind, rain).

Background art discloses several works aiming to make the drone being autonomous while following a controlled path. Those works fall under the resolution of a control theory problem. The following steps define such problem:

- Defining a 6-dimensions-path to be followed by the drone in terms of translations and rotations relatively to the global frame,
- Designing a model of the drone i.e. a mathematic formulation linking the drone flight controls and its flight dynamics (position, speed, orientation),
- Measuring some of the flight dynamics (position, speed, orientation),
- Building a system of controlling that takes advantage of the drone model and of the current measures of the dynamics to adapt the current flight control so that the resulting path of the drone is as close as possible from the predefined one.

Several systems and methods from the background art tend to solve this control problem, but some major technical issues still remain, as mentioned hereafter. As a matter of example, document U.S.2004/245378 A1 discloses a control method for an unmanned helicopter comprising a GPS (Global Positioning System) and other sensors to measure its elevation. The control method comprises a feedback control loop based on a well-known LQG control (Linear Quadratic Regulation) implementing independent controllers to control the longitudinal, lateral, and vertical displacements of the drone.

This clear disassociation of the controllers for each translation dimension obviously makes the computation of the whole controlling system less optimal in term of flight controls command than a method, which would process the whole dynamics at the same time.

In addition, the longitudinal and lateral controllers use a serial arrangement of separate controllers for velocity and orientation. Hence, it is not possible for an operator to attach more importance to the control of velocity, rather than orientation, or vice-versa, as both flight dynamics must be serially processed. Such an architecture does not provide enough freedom of use to an operator to always best answer his current needs.

As another drawback, it shall be noticed that the system disclosed by U.S.2004/245378 A1 implements a specific model to control the servomotor of a dedicated helicopter. Said model is therefore not easily adaptable to another type of helicopter, what obviously forces the operator to use a single type of drone whereas another type might be more suitable regarding the mission to undertake.

More generally, there are several prior art techniques for controlling UAV, which are all designed for a specific type of drone.

It would hence be desirable to provide a method for controlling a rotary-wing drone showing improvements of the prior art.

Notably, it would be desirable to provide such a method, which would propose a generic interface of control of UAV, and which would hence be adapted to control the path of any rotary-wing drone.

It would also be desirable to provide such a method, which would ease the control of a rotary-wing drone, and which would optimize the path followed to reach its final destination.

It would also be desirable to provide such a method, which would reduce the computation load over the prior art.

It would also be desirable to provide such a control method, which computational complexity would be low enough for it to be embedded in a drone processing unit.

### 3. Summary of Invention

In one particular embodiment of the invention, a method for controlling a path of a rotary-wing drone is disclosed, which comprises steps for:

- Establishing a first-order temporal relation between flight control parameters and flight dynamics for said rotary-wing drone comprising:

  o An Explicit Discrete Time-Variant State-Space Representation of a translation control of said rotary-wing drone;
  o An Explicit Discrete Time-Variant State-Space Representation of a course control of said rotary-wing drone;

- Controlling the path of said rotary-wing drone by:

  o Estimating a course of said rotary-wing drone on the basis of said Explicit Discrete Time-Variant State-Space Representation of a course control of said rotary-wing drone;
  o Estimating a position of said rotary-wing drone on the basis of said Explicit Discrete Time-Variant State-Space Representation of a translation control of said rotary-wing drone;

Said steps of estimating are performed independently.

In the following description, the expression "rotary-wing drone" refers to an Unmanned Aerial Vehicle (UAV) whose displacements in the space can be controlled by the variations of the four different flight controls mentioned here before: the roll angle, the pitch angle, the yaw speed and the elevation speed. The term "path" refers to a track defined in six dimensions in a global three-dimensional frame, including three translations and three rotations, to be followed by the rotary-wing drone. The term "course" refers to the rotational speed of the drone around the vertical axis in a clockwise way, this value being linearly related to the yaw angle of the drone. The term "trajectory" refers to the translational displacement of the drone from one point to another. The expression "flight dynamics" refers to the position, the speed and the orientation of the drone, in respect to a global three-dimensional frame.

Based on its features, the present invention relies on a novel and inventive approach of the control of a rotary-wing drone, and includes several advantages and benefits. First of all, the step of estimating the drone's position and its course allows the drone to control in real-time and in an autonomous way its flight dynamics. The drone is then able to stick the best to a specific path that has been assigned to it, while keeping the capacity to adapt its flight dynamics to face any unexpected events that may occur and move it away from its initial path. As a matter of example, one can order the drone to reach some point of the space by following a specific path. On the way to its destination, the drone is then moved away from its initial path under the action of a strong wind. Thanks to the step of estimating its position according to the present invention, the drone is then able to make a new estimation of the path to follow and to adjust its flight dynamics in accordance with. Thus, the present invention allows the operator to transfer part of its capacity of decision to the drone in order to ease its control while optimizing the path followed by the drone to reach its final destination.

Another advantage of the invention relies on the estimation of no more than two variables when performing the step of control of the six-dimensional path to be followed by the drone: the trajectory and the course. This limitation introduced by the invention on the number of controlled variables eases the computation of the whole controlling method while remaining valid enough for a rotary-wing drone whose trajectory is close to planar in general. The path followed by the drone is also smoother since the whole dynamics are processed in no more than two operations. In addition, the linearization of the control problem on the basis of the two first-order-temporal related models implemented by the invention also contributes to reduce the computational load of said method for controlling. The controlling method of invention thus advantageously relies on a very interesting compound and coupled model of a generic-rotary wing drone.

Another advantage of the invention relies on the independence of the two sub-steps of estimating the course and the position. In opposition with some methods disclosed in the background art, these two sub-steps of estimating do not need to be performed serially. In other terms, the course and the position can be estimated either in parallel, or one after the other. An operator also has the option to perform more estimations on one variable more than on the other in a certain amount of time. The operator is then able to allocate different computing resources for the run of each of these two estimating sub-steps, based on the accuracy required in the determination of the path and on the current activity of the drone.

Another advantage of the present invention relies in the fact that the position and the course are estimated in relation to the flights control. Nowadays, as mentioned here before, the displacement of any kind of rotary-wing drone is determined based on these four flight controls. Therefore, the method for controlling according to the present invention can be easily adapted to any kind of rotary-wing drone, provided that the operator inputs a few drone-dependent values prior to the first use. A method for determining these drone-dependent values based on the running of a basic unitary test is described in the description here after.

In one particular embodiment, the step of controlling the path of said drone comprises estimating a speed of said rotary-wing drone on the basis of said Explicit Discrete Time-Variant State-Space Representation of a translation control of said drone.

An advantage of a method for controlling the drone according to this particular embodiment is that it allows estimating the translational speed that said rotary-wing drone should have to reach its final destination in a required time frame.

In one particular embodiment, the step of controlling the path of said drone comprises estimating the flight controls, which shall be applied to said drone for it to follow a predetermined path.

An advantage of a method for controlling the drone according to this particular embodiment is that the flight dynamics, estimated following the run of the method for controlling, are directly converted in related orders based on a variation of the drone flight controls. As a matter of example, an order based on the variation of the yaw speed of the drone can be given in order to modify its course. A command based on the variation of the pitch angle, the roll angle and the elevation speed of the drone can be given in order to modify its position and its translational speed. The flight controls estimated following the run of the method for controlling can therefore be applied to the drone so that it follows a predetermined path.

According to another aspect, the method for controlling also comprises a step of measuring flight dynamics of said drone, said flight dynamics belonging to the group comprising:

- a speed;
- a position;
- an orientation.

Hence, a flight dynamic belonging to the group mentioned here before can first be measured and then used in the sub-steps of estimating the position, the speed and/or the course of the drone in order to make the estimation more accurate. Therefore, a method for controlling according to this particular embodiment is able to take in account the variations of the flight dynamics of the drone occurring during its displacements.

In one particular embodiment, the step of measuring comprises detecting by at least one thermal camera at least one predetermined reference point on said drone.

The use of a thermal camera is an advantageous alternative to other kind of localization systems known from the background art (GPS, lasers). It is particularly well suited in an indoor environment. Of course, any other measuring technique may also be used according to the invention.

In another particular embodiment, the steps of controlling and measuring are successively repeated at a predetermined period of time k.

At each period of time k, the flight dynamics and flight controls of the drone are updated in order to make the drone follow a path as close as possible to the predetermined one. As a consequence, the value of the period of time k is in direct relation with the efficiency of the method for controlling the drone, regarding its accuracy but also its computation load. The decrease of the period of time k induces the increase of the accuracy of the method for controlling but also the increase of the computation load required for its implementation. One should therefore define the period of time k by making a good trade-off between the advantages and drawbacks mentioned here before. According to particular embodiments of the invention, different values of the period of time k can be respectively assigned to the sub-steps of estimating the course and the position of the drone, regarding the needs of the operator.

In one particular embodiment, the period of time k is smaller or equal to 0.1 second.

Series of measurements conducted on basic rotary-wing drones showed that a period of time k equal or smaller to 0.1 second allows the drone to adapt efficiently its path according to unexpected events that may occur in its direct environment. If the operator adopts a value of k higher than 0.1 second, a sufficient reactivity of the drone is not guaranteed in normal conditions of use. When using the drone in an environment requiring faster adjustments, the operator has the option to reduce the value of k in order to make the control of the drone comply with its specific needs.

In one particular embodiment, the step of establishing a first-order temporal relation between flight control parameters and flight dynamics for said drone implements at least one of the predetermined coefficients K and T that refer respectively to the linear gain value and the amortization coefficient value of said drone.

Such kind of coefficients are specific to each rotary-wing drone and depend on the mass of the drone, its shape, the power of its rotors and several other parameters known in the background art. An advantage of a method for controlling the drone according to this particular embodiment is that this method takes account of the specific technical features of each kind of rotary-wing drone while remaining easily adaptable to others. Both the coefficients K and T are determined following the run of a unitary test. Such unitary test consists in a process comprising the following steps:

- Instructing the drone to reach a specific destination at a predetermined and constant speed value.
- Measuring the genuine time taken by the drone to reach the same destination.
- Making a comparison between the theoretical time and the genuine time taken by the drone to reach the destination.
- Determining the coefficients K and T based on the results of this measurement.

The linear gain value (coefficient K) is calculated based on the time taken by the drone to reach its maximum speed. The amortization value (coefficient T) is calculated based on the relation between the theoretical and the genuine maximum speed of the drone. The unitary test on the drone is performed either by the operator or the fabricant of the drone. Once the values of the coefficients K and T related to a specific rotary-wing drone are inputted into a system implementing a method for controlling the drone according to this particular embodiment, the same method can then be implemented for controlling this specific rotary-wing drone.

In one particular embodiment, the method for controlling the path of a rotary-wing drone comprises a step of inputting spatial coordinates of a geographical point to be reached by the drone.

According to this particular embodiment, the operator inputs the spatial coordinates of a geographical point to be reached by the drone. This input can be performed by manually keying the spatial coordinates of said point or by using a more advanced interface of localization as one known from the background art. Once the point to be reached is determined, the method for controlling according to this particular embodiment is then able to direct the drone on the most optimal path. It shall be noticed that the step of inputting the coordinates can be performed either prior to the course of the drone, or at any time during its course. The operator is therefore able to update at any time the geographical point to be reached by the drone.

In one particular embodiment, the method for controlling the drone comprises a step implemented by said drone of locating a point of the space to be reached.

According to this particular embodiment, the drone itself inputs in an autonomous way the spatial coordinates of a geographical point to reach. An advantage of this embodiment is the autonomy of the drone in the determination of the point of the space to reach. The drone is then able to modify its destination according to a target that can be seen by the drone only, and not by the operator. This superiority of the drone on the operator in the localization of the target to be reached can be due to a better angle of view or the use by the drone of additional detecting devices. Another advantage of this embodiment is the possibility to define the position to be reached by the drone according to the position of a moving target. The drone is then able to update during its course the localization of the position to be reached according to the displacements of the assigned target. As a matter of example, this particular technical feature can be implemented in some media applications in which a drone equipped with a camera is instructed to reach and to remain at a certain distance forward of a person walking on the street. According to the displacement of this person, the drone is then updating during its course the localization of the point to reach to comply with the instructions given by the operator.

According to another aspect of the invention, a system for controlling a path of a rotary-wing drone is disclosed, which implements two feedback control loops:

- A first feedback control loop, which estimates a course of said rotary-wing drone on the basis of an Explicit Discrete Time-Variant State-Space Representation of a course control of said rotary-wing drone;

- A second feedback control loop, which estimates a position of said rotary-wing drone on the basis of said Explicit Discrete Time-Variant State-Space Representation of a translation control of said rotary-wing drone;

said first and second feedback control loops running independently of each other.

Such a system hence relies on a compound and coupled model of a generic rotary-wing drone, which gives a first-order temporal relation between its flight control and its dynamics. Moreover, it offers a global control architecture integrating such a drone model and a Full State Feedback strategy to control the generic rotary-wing drone. Both the drone model and the architecture are generic enough to control the path of any rotary-wing drone with a generic input interface.

According to yet another aspect of the invention, said first feedback control loop computes:

 o a predefined course to be reached by said drone;
 o a measurement value of a current course of said drone;
 o a linear gain coefficient K and an amortization coefficient T of said drone;

in order to determine a first command to be implemented on a yaw speed of said drone, and said second feedback control loop computes:

 o a predefined trajectory to be followed by said drone;
 o a measurement value of a current position and a current translational speed of said drone;
 o the linear gain coefficient K and the amortization coefficient T of said drone;

in order to determine a second command to be implemented on a pitch angle, a roll angle and an elevation speed of said drone.

The advantages of such a system are the same as the advantages related to the method for controlling a drone described here before.

The invention also concerns a rotary-wing drone characterized in that it comprises the system for controlling according to this particular embodiment of the invention.

The invention also concerns a use of a drone according to this particular embodiment of the invention for recording audio-visual data.

As described here before, an advantage of the use of such a drone for recording audio-visual data is that this drone can capture sounds and pictures from a point of the space inaccessible for the operator, or while performing complex motions that cannot be conducted by a person with such a level of accuracy, or without implementing numerous costly and time-consuming additional technical means.

While not explicitly described, the present embodiments may be employed in any combination or sub-combination.

### 4. Brief description of the drawings

The invention can be better understood with reference to the following description and drawings, given by way of example and not limiting the scope of protection, and in which:

- Figure 1 is a schematic view of geometric elements, notations, and flight controls of a rotary-wing drone;

- Figure 2 features a simplified structure of a communication device, implementing the method for controlling a path of a rotary-wing drone, according to an embodiment of the invention;

- Figure 3 is a flow chart of the successive steps implemented when performing a method for controlling a path of a rotary-wing drone, according to an embodiment of the invention;

- Figure 4 is a schematic view of the global architecture of a path control system according to one embodiment.

The components in the figures are not necessarily to scale, emphasis instead being placed upon illustrating the principles of the invention.

### 5. Description of embodiments

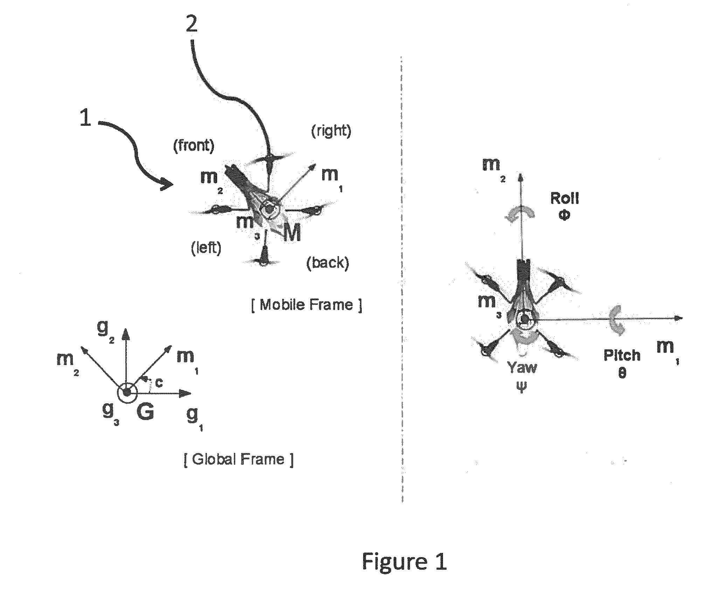

The present invention relates to systems and methods for controlling a rotary-wing drone embodying two feedback control loops that can be performed independently. Many specific details of certain embodiments of the invention are set forth in the following description and in figures 1 to 4 to provide a thorough understanding of such embodiments. One skilled in the art, however, will understand that the present invention may have additional embodiments, or that the present invention may be practiced without several of the details described in the following description.

Flight controls and dynamics of a rotary-wing drone

Figure 1 illustrates schematically the flight controls of a rotary-wing drone 1 featuring four distinctive rotors 2. As mentioned in the introduction of the background art, it is therefore by changing the rotation speed and/or the angular inclination of the same rotors 2 that an operator is controlling the drone 1. Figure 1 especially illustrates the position of such kind of drone 1 in a global frame $(G; g_1; g_2; g_3)$ or a mobile frame $(M; m_1; m_2; m_3)$ based on the variation of its four flight controls, namely: the pitch angle $\theta$, the roll angle $\Phi$, the yaw speed $\dot{\psi}$ and the elevation speed z. More precisely:

- A pitch angle $\theta$ variation makes the drone 1 going forward (negative pitch) or backward (positive pitch),

- A roll angle $\Phi$ variation makes the drone 1 going left (negative roll) or right (positive roll),

- A yaw speed $\dot{\psi}$ variation makes the drone 1 turning around the vertical axis in a counter-clockwise (negative yaw speed) or clockwise way (positive yaw speed),

- An elevation speed z makes the drone 1 going up (positive elevation speed) or down (negative elevation speed), more or less quickly.

The variation of these four flight controls then induces the variation of its flight dynamics, namely: its position $p^r$, its speed $v^r$ and its course $c^r$.

Description of system for controlling the path of a rotary-wing drone

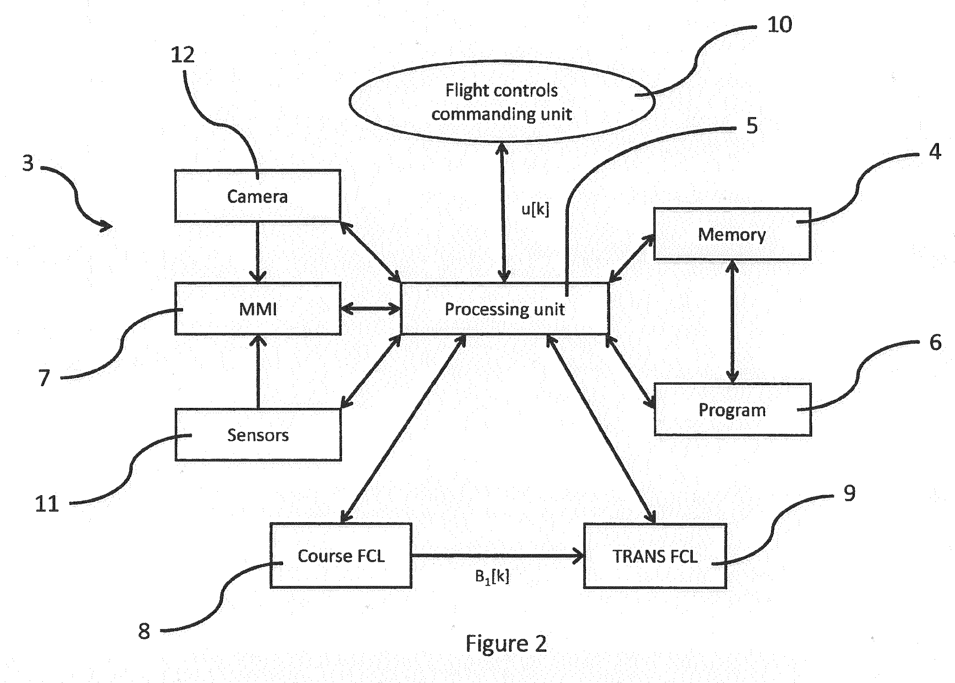

Figure 2 presents a simplified structure of a system 3 for controlling the path of a rotary-wing drone 1, according to one embodiment of the invention.

Regarding figure 2, a system 3 according to the invention comprises a memory 4 comprising a buffer memory RAM, a processing unit 5 comprising for example a micro processor and driven by a computer program 6 implementing the method for controlling the drone 1. The system 3 also comprises an interface Human/Machine (H/M) 7, comprising for example a keyboard and a display, which allows an operator to input data into the system and/or collect information from the same system 3.

The system 3 also comprises a course feedback control loop COURSE FCL 8 and a translational feedback control loop TRANS FCL 9.

COURSE FCL 8 is intended to estimate the course $c^r$ of the drone 1 on the basis of a course model detailed here after whereas TRANS FCL 9 is intended to estimate the position $p^r$ of the drone 1 on the basis of a translational model detailed here after.

According to one embodiment of the invention, COURSE FCL 8 is also intended to estimate the speed $v^r$ of the drone 1 on the basis of the same translational model.

The system 3 also comprises a flight controls commanding unit 10 that computes the commands u[k] provided by the processing unit 5 into commanding orders transmitted to each of the four rotors 2 of the drone 1, in order to make respectively their rotational speed and their orientation varying.

In one embodiment of the invention, the system 3 also comprises sensors 11 that determine in real-time, during the flight of the drone 1, the instantaneous values of its flight dynamics. As a matter of example, these sensors 11 can comprise a thermal camera intended to detect the displacements of a predetermined reference point located on the drone 1. In other embodiments of the invention, alternative forms of sensors can be implemented, as GPS systems or lasers.

In one embodiment of the invention, the system 3 also comprises a camera 12 used to localize the position of obstacles to avoid by the drone and/or point of the space to be reached.

According to one embodiment of the invention, the whole system 3 is built in a rotary-wing drone 1. According to another embodiment of the invention, part of the system 3 is got on-board while another part remains external to the drone 1, for example the interface H/M 7 and the sensors 11.

Description of a method for controlling a rotary-wing drone

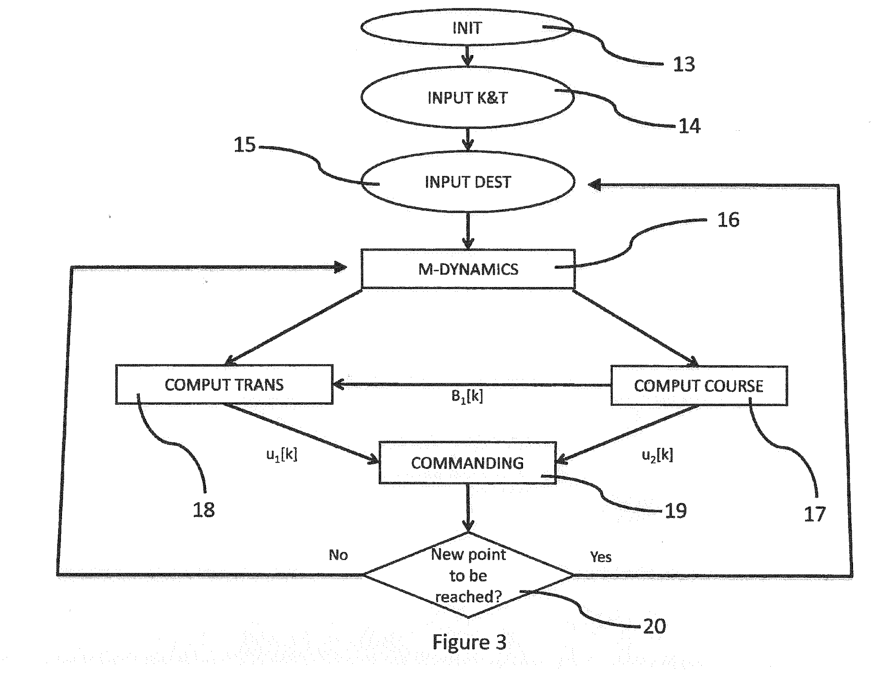

Figure 3 illustrates in more details the successive steps implemented by the method for controlling the drone 1 according to one embodiment of the invention.

After an initial step INIT 13, the operator conducts the step INPUT K&T 14 in which the operator inputs, using the interface H/M 7, the technical features specific to the rotary-wing drone 1.

In one embodiment, these features are limited to the linear gain $K_\alpha$ and the amortization coefficient $\tau_\alpha$, both determined following the run of a unitary test of the type described in the summary of invention.

In one embodiment, the respective values of the linear gain $K_\alpha$ and the amortization coefficient $\tau_\alpha$ as set for a previous flight are saved by the system 3, for example in the memory 4. These values are then re-used when running a further flight. According to this embodiment, the operator only performs the step INPUT K&T 14 when the correction of at least one of these values is required.

The operator then conducts the step INPUT DEST 15 in which the operator inputs the spatial coordinates of a point of the space to be reached by the drone 1.

According to another embodiment of the invention, the drone 1 locates in an autonomous way the point to be reached, for example by using a camera 12 built in, and then performs by itself the step INPUT DEST 15.

Following the run of the step INPUT DEST 15, the system 3 runs the step M-DYNAMIC 16 in which the system 3 measures at least one of the instantaneous dynamics of the drone 1. This measurement can be performed using the sensors 11.

In one embodiment, the system 3 first runs the step COMPUT COURSE 17 in which the system 3 determines a first command to be implemented on the yaw speed $\dot\psi$ of the drone 1, by using the COURSE FCL 8.

The system 3 then runs the step COMPUT TRANS 18 in which the system 3 determines a first command to be implemented on the pitch angle $\theta$, the roll angle $\Phi$ and the elevation speed z of the drone 1, by using the TRANS FCL 9.

In another embodiment, the system 3 first runs the step COMPUT TRANS 18 before running the step COMPUT COURSE 17.

In another embodiment, the steps COMPUT COURSE 17 and COMPUT TRANS 18 are run in parallel by the system 3.

In all of these embodiments, it shall be noticed that the steps COMPUT COURSE 17 and COMPUT TRANS 18 are run independently of each other.

Following the run of COMPUT COURSE 17 and COMPUT TRANS 18, the command $u_1[k]$ to be implemented on the yaw speed $\dot\psi$ of the drone 1 and the command $u_2[k]$ to be implemented on the pitch angle $\theta$, the roll angle $\Phi$ and the elevation speed z are transmitted to the flight controls commanding unit 10 (step COMMANDING 19).

The succession of the steps M-DYNAMIC 16, COMPUT COURSE 17, COMPUT TRANS 18 and COMMANDING 19 constitute a general step named CONTROLLING.

Following the run of the step COMMANDING 19, the step CONTROLLING is repeated at a predetermined period of time k equal or inferior to 0.1 second.

In one embodiment of the invention, the operator can input and correct at wish the value of this predetermined period of time k while running the system 3.

Prior to a new iteration of the step CONTROLLING, the operator has the possibility to decide to define a new point to be reached by the drone (test 20) and therefore to run the step INPUT DEST 13 before the following steps 16 to 19.

In one embodiment of the invention, this decision can be taken 20 by the drone itself, autonomously, using for example its camera 10 on-board to determine the position of a new point to be reached.

The following gives additional details about the model according to one embodiment of the invention, i.e. the mathematical formulation linking the flight controls and the flight dynamics of the drone 1. The architecture of the control system 3 is also described.

Model

a) Notations and Assumptions

In the following description, the notations introduced in figure 1 are adopted. q(t) indicates a continuous-time quantity while q[k] indicates a discrete-time quantity and q indicates the time-derivative of q.

G is the origin of a global frame (G; $g_1$; $g_2$; $g_3$) whereas M is the center of mass of the drone but also the origin of a mobile frame (M; $m_1$; $m_2$; $m_3$).

p(t) = GM(t) (respectively p[k] = GM[k]) is the position vector of the drone in the global frame and v(t) (respectively v[k]) its speed.

$\Phi(t)$ (respectively $\Phi[k]$), $\theta(t)$ (respectively $\theta[k]$), $\dot{\psi}(t)$ (respectively $\dot{\psi}[k]$) and $z(t)$ (respectively $z[k]$) are the flight controls of a rotary-wing drone.

The modeling part described here after relies on the two following assumptions:

- Under normal flight conditions, the roll and pitch angles variations are negligible (usually smaller than 5°) compared with the yaw angle variations (in the full range 0° - 360°) for the description of the orientation of the drone 1. Under this assumption, $g_3$ and $m_3$ are equal and the orientation of the drone 1 in the global frame may be restricted to the only course angle $c(t)$ (respectively $c[k]$), linearly related to the yaw angle (see Figure 1).

- The flight dynamics of the drone 1 in terms of rotation around the $m_3$ axis are designed to be very slower than the dynamics of the drone 1 in terms of translation along the $m_1$ axis, $m_2$ axis and $m_3$ axis. Under this assumption, the control of the translation and the course of the drone 1 may be described by two different but coupled linear State Space Representations, namely: a translational control model and a course control model.

b) Translation Control Model

Considering the previous assumptions, to model the translation control part, a continuous simple linear amortized model of the speed of the generic rotary-wing drone is initially proposed. It can be mathematically formulated by:

$$\dot{v}(t) = \dot{v}_\Phi(t)\, m_1 + \dot{v}_\theta(t)\, m_2 + \dot{v}_{\dot{z}}(t)\, m_3$$

Where

$$\dot{v}_\alpha(t) = \frac{1}{\tau_\alpha}(K_\alpha \alpha - v_\alpha(t)) \text{ for } \alpha \text{ in } \{\Phi, \theta, \dot{z}\}$$

With $K_\alpha$ and $\tau_\alpha$ being respectively the linear gain and the amortization coefficient of the model along each direction. Those gains are drone-dependent and may be easily determined for one specific drone making use of basic unitary tests of the type described in the summary of invention.

In addition, $m_1$, $m_2$ and $m_3$ are considered independent of the time during one step of integration (due to the assumptions of a)) with

$$m_1 = \begin{Bmatrix} \cos(\hat{c}(t^-)) \\ \sin(\hat{c}(t^-)) \\ 0 \end{Bmatrix}, \; m_2 = \begin{Bmatrix} -\sin(\hat{c}(t^-)) \\ \cos(\hat{c}(t^-)) \\ 0 \end{Bmatrix} \text{ and } m_3 = \begin{Bmatrix} 0 \\ 0 \\ 1 \end{Bmatrix}$$

Where $\hat{c}(t^-)$ is an estimate of the course of the drone just before one step of integration.

Under those conditions, it can be shown that $v(t)$ may be written as:

$$\dot{v}(t) = -T\, v(t) + M\, T\, K\, u_1(t)$$

Where

$$M = \begin{bmatrix} m_1 & m_2 & m_3 \end{bmatrix}, \; T = \begin{bmatrix} \frac{1}{\tau_\Phi} & 0 & 0 \\ 0 & \frac{1}{\tau_\theta} & 0 \\ 0 & 0 & \frac{1}{\tau_{\dot{z}}} \end{bmatrix}, \; K = \begin{bmatrix} K_\Phi & 0 & 0 \\ 0 & K_\theta & 0 \\ 0 & 0 & K_{\dot{z}} \end{bmatrix}$$

And

$$u_1(t) = \left\{ \begin{array}{c} \phi(t) \\ \theta(t) \\ \dot{z}(t) \end{array} \right\}$$

After a discretization step, this same equation may be rewritten by:

$$v[k+1] = (I_3 - T_D[k]) \, v[k] + M_D[k] \, T_D[k] \, K \, u_1[k]$$

Where $I_3$ is the identity matrix in dimension 3, $M_D[k] = \begin{bmatrix} \cos(\hat{c}[k]) & -\sin(\hat{c}[k]) & 0 \\ \sin(\hat{c}[k]) & \cos(\hat{c}[k]) & 0 \\ 0 & 0 & 1 \end{bmatrix}$

And $T_D[k] = \Delta[k]T$,

With $\Delta[k]$ designating the discretization period of time k.

From this last equation, one can then easily derived an Explicit Discrete Time Variant State Space Representation to model the translation control part of the drone.

By:

• Choosing the internal state of the State Space Representation $x_1[k]$ at the period of time k as the concatenation of the speed vector $v[k]$ and the position vector $p[k]$,
• Including a modeling error as an independent and identically distributed (i.i.d.) additive centered Gaussian noise $f_1[k]$ with known covariance matrix $F_1$ and
• Assuming than one may have access to a measurement $y_1[k]$ of the whole state $x_1[k]$ with a measurement error modeled as an i.i.d additive centered Gaussian noise $h_1[k]$ of known covariance $H_1$,

One has the following Explicit Discrete Time-Variant State Space Representation:

$$\left\{ \begin{array}{c} v[k+1] \\ p[k+1] \end{array} \right\} = \begin{bmatrix} I_3 - T_D[k] & 0_3 \\ \Delta I_3 & I_3 \end{bmatrix} \left\{ \begin{array}{c} v[k] \\ p[k] \end{array} \right\} + \begin{bmatrix} M_D[k]T_D[k]K \\ 0_3 \end{bmatrix} u_1[k] + f_1[k]$$

and

$$y_1[k] = I_6 \left\{ \begin{array}{c} v[k] \\ p[k] \end{array} \right\} + h_1[k]$$

i.e. $x_1[k+1] = A_1[k] \, x_1[k] + B_1[k] \, u_1[k] + f_1[k]$

and

$$y_1[k] = C_1 \, x_1[k] + h_1[k]$$

c) Course Control Model

The course modeling can be mathematically formulated by:

• Choosing the internal state of the State Space Representation $x_2[k]$ at the period of time k as the course $c[k]$,

- Including a modeling error as an i.i.d. additive centered Gaussian noise $f_2[k]$ with known variance F2 and
- Assuming that one may have access to a measurement $y_2[k]$ of the whole state $x_2[k]$ with a measurement error modeled as an i.i.d additive centered Gaussian noise $h_2[k]$ of known variance $H_2$,

One has the following Explicit Discrete Time-Variant State Space Representation:

$$c[k+1] = 1 \, c[k] + K_{\dot{\psi}} \Delta[k] \, \dot{\psi}[k] + f_2[k]$$

And

$$y_2[k] = 1 \, c[k] + h_2[k]$$

Where $K_{\dot{\psi}}$ is a drone-dependent linear gain that may be easily determined for one specific drone making use of basic unitary tests.

By noting $u_2[k] = \dot{\psi}[k]$, we thus have the course control model by:

$$x_2[k+1] = a_2 \, x_2[k] + b_2[k] \, u_2[k] + f_2[k]$$

and

$$y_2[k] = c_2 \, c[k] + h_2[k]$$

Control Architecture

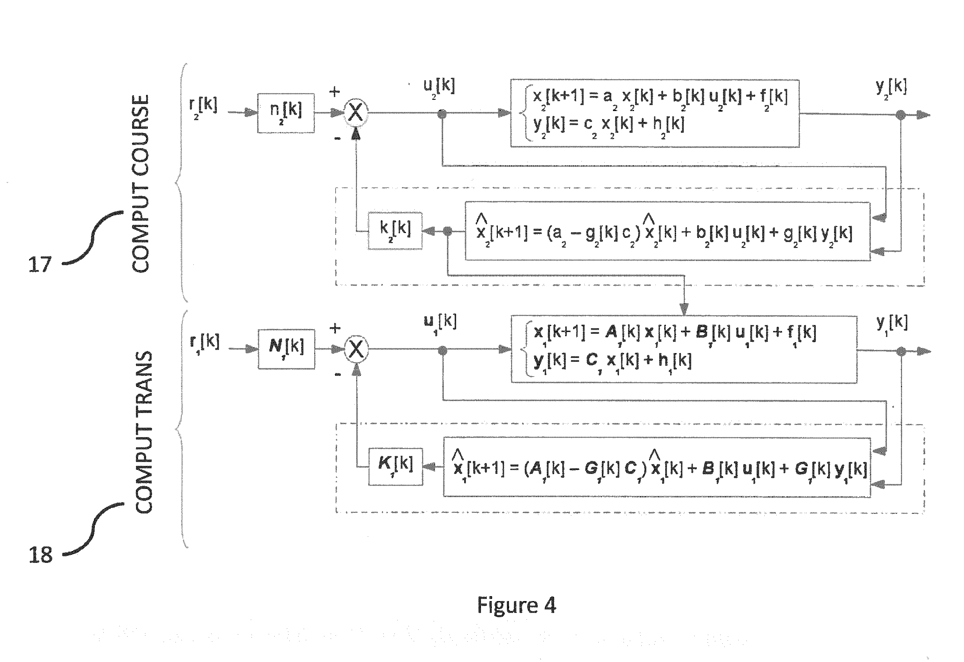

Given those two models, figure 4 illustrates the architecture of the control system 3 to estimate at each period of time k, the flight control u[k] so that the drone 1 follows the path r[k], leading to the operator-defined point to be reached, given by:

$$u[k] = \begin{Bmatrix} u_1[k] \\ u_2[k] \end{Bmatrix} \text{ and } r[k] = \begin{Bmatrix} r_1[k] \\ r_2[k] \end{Bmatrix} = \begin{Bmatrix} v^r[k] \\ p^r[k] \\ c^r[k] \end{Bmatrix}$$

As illustrated by figure 4, the run of the step COMPUT COURSE 17 is done independently of the run of the step COMPUT TRANS 18 on the basis of the assumptions a). The matrices $B_1[k]$ is built at each period of time k making use of the course $\hat{x}_2[k+1]$ estimated from the kalman filter.

One can notice that the steps COMPUT COURSE 17 and COMPUT TRANS 18 remain independent of each other since these steps can be performed in parallel or one after the other. In one embodiment, one step is performed more than the other in a certain amount of time. In particular, when the step COMPUT TRANS 18 is performed more than the step COMPUT COURSE 17 in a certain amount of time, the value of the estimated course $\hat{x}_2[k+1]$ remains unchanged between two iteration of the step COMPUT COURSE 17 and is therefore used several times, once at each iteration of the step COMPUT TRANS 18.

The command u[k] at each period of time k is computed from:

$$u[k] = \begin{Bmatrix} u_1[k] \\ u_2[k] \end{Bmatrix} = \begin{Bmatrix} N_1[k] \, r_1[k] - K_1[k] \, \hat{x}_1[k] \\ n_2[k] \, r_2[k] - k_2[k] \, \hat{x}_2[k] \end{Bmatrix}$$

Where:

- $(N_1[k], K_1[k])$ and $(n_2[k], k_2[k])$ are the pre-filter and Full State Feedback gain of the position control block and of the course control block respectively, and

- $\hat{x}_1[k]$ and $\hat{x}_2[k]$ are the estimates of the states $x_1[k]$ and $x_2[k]$ respectively, computed from the associated kalman filters.

Concerning the parameters embodied in the step COMPUT TRANS 18:

- The gain $K_1[k]$ is computed as the solution of a Discrete Linear Quadratic Gaussian regulator with infinite horizon, i.e., $K_1[k] = (R + B_1[k]^T P[k] B_1[k])^{-1} B_1[k]^T P[k] A_1[k]$ where $P[k]$ is the solution of the Discrete Algebraic Ricatti Equation $P[k] = Q + A_1[k]^T (P[k] - P[k] B_1[k] (R + B_1[k]^T P[k] B_1[k])^1 B_1[k]^T P[k]) A_1[k]$. Such a solution may be computed by the means of specific algorithm based on a Schur decomposition for instance. The matrices Q and R are two user-defined weighting matrices, which intend to control the quality of the regulation: increasing the value of R (by multiplying R by a positive scalar) intends to smooth the variation of the control flight ($u_1$) and therefore the path taken by the drone 1, while increasing the value of Q intends to smooth the variation of the flight dynamics ($x_1$) and therefore the activity of the rotors of the drone 1. They are initially set to the identity matrix $I_3$.

- The pre-filter $N_1[k]$ is chosen so that the Full State Feedback converge toward $r_1[k]$. One can especially show that a choice of $N_1[k] = (B_1[k]^T B_1[k])^{-1} B_1[k]^T ((I_6 + B_1[k] K_1[k]) - A_1[k])$ is appropriate.

- $\hat{x}_1[k]$ is the estimate of $x_1[k]$ from a standard Discrete Non-Stationnary Kalman Filter with a gain $G_1[k]$ at the step k which update is done by the means of the covariance matrices $F_1$, $H_1$ and of the translation control model.

-

$$\hat{x}_1[k+1] = (A_1[k] - G_1[k]C_1)\,\hat{x}_1[k] + B_1[k]u_1[k] + G_1[k]y_1[k].$$

Concerning the parameters embodied in the step COMPUT COURSE 17:

- The gain $k_2[k]$ is computed so that the dynamics of the state $x_2[k]$ are slower enough to be compatible with the assumption of a). One can especially show that, to have an attenuation $\gamma$ of the control error after a time $\tau$, one could especially chose $k_2[k] = \exp(\dfrac{\overline{[k]}\log(\gamma)}{\tau - \overline{[k]}})$ where $\overline{[k]}$ is the mean value of the period of time k of the process.

- The pre-filter $n_2[k]$ is chosen so that the Full State Feedback converge toward $r_2[k]$. One can show that the choice $n_2[k] = k_2[k]$ is appropriate.

- $\hat{x}_2[k]$ is the estimate of $x_2[k]$ from a standard Discrete Non-Stationnary Kalman Filter with a gain $g_2[k]$ at the step k which update is done making use of the variances $f_1$, $h_1$ and of the course control model.

-

$$\hat{x}_2[k+1] = (a_2 - g_2[k]c_2)\,\hat{x}_2[k] + b_2[k]u_2[k] + g_2[k]y_2[k].$$

**Claims**

1. A method for controlling a path of a rotary-wing drone (1), **characterized in that** said method comprises steps for:

    • Establishing a first-order temporal relation between flight control parameters and flight dynamics for said rotary-wing drone (1) comprising:

        o An Explicit Discrete Time-Variant State-Space Representation of a translation control of said rotary-wing drone (1);
        o An Explicit Discrete Time-Variant State-Space Representation of a course control of said rotary-wing drone (1);

    • Controlling the path of said rotary-wing drone (1) by:

        o Estimating a course (17) of said rotary-wing drone (1) on the basis of said Explicit Discrete Time-Variant State-Space Representation of a course control of said rotary-wing drone (1);

o Estimating a position (18) of said rotary-wing drone (1) on the basis of said Explicit Discrete Time-Variant State-Space Representation of a translation control of said rotary-wing drone (1);

said steps of estimating (17; 18) being performed independently.

2. The method according to claim 1, wherein said step of controlling the path of said drone (1) also comprises estimating a speed of said rotary-wing drone (1) on the basis of said Explicit Discrete Time-Variant State-Space Representation of a translation control of said drone (1).

3. The method according to any of claims 1 and 2, wherein said step of controlling the path of said drone (1) comprises estimating the flight controls which must be applied to said drone (1) for it to follow a predetermined path.

4. The method according to any of claims 1 to 3, also comprising a step of measuring flight dynamics (16) of said drone (1), said flight dynamics belonging to the group comprising:

   • a speed;
   • a position;
   • an orientation.

5. The method according to claim 4, **characterized in that** said step of measuring (16) comprises detecting by at least one thermal camera (11) at least one predetermined reference point on said drone (1).

6. The method according to any of claims 1 to 5, **characterized in that** said steps of controlling and measuring are successively repeated at a predetermined period of time k.

7. The method according to claim 6, **characterized in that** said period of time k is smaller or equal to 0.1 second.

8. The method according to any of claims 1 to 7, wherein said step of establishing a first-order temporal relation between flight control parameters and flight dynamics for said drone (1) implements at least one of predetermined coefficients K and T that refer respectively to the linear gain value and the amortization coefficient value of said drone (1).

9. The method according to any of claims 1 to 8, **characterized in that** it comprises a step of inputting spatial coordinates of a geographical point to be reached by the drone (1).

10. The method according to any of claims 1 to 9, comprising a step implemented by said drone (1) of locating a point of the space to be reached.

11. A system (3) for controlling a path of a rotary-wing drone (1), **characterized in that** said system (3) comprises two feedback control loops (8; 9):

   • A first feedback control loop (8), which estimates a course of said rotary-wing drone (1) on the basis of an Explicit Discrete Time-Variant State-Space Representation of a course control of said rotary-wing drone (1);
   • A second feedback control loop (9), which estimates a position of said rotary-wing drone (1) on the basis of said Explicit Discrete Time-Variant State-Space Representation of a translation control of said rotary-wing drone (1);

said first and second feedback control loops (8; 9) running independently of each other.

12. A system (3) according to claim 11, **characterized in that**:

   • said first feedback control loop (8) computes:

      o a predefined course to be reached by said drone (1);
      o a measurement value of a current course of said drone (1);
      o a linear gain coefficient K and an amortization coefficient T of said drone (1);

   in order to determine a first command to be implemented on a yaw speed of said drone (1),

and **in that**

• said second feedback control loop (9) computes:

 o a predefined trajectory to be followed by said drone (1);
 o a measurement value of a current position and a current translational speed of said drone (1);
 o the linear gain coefficient K and the amortization coefficient T of said drone (1);

in order to determine a second command to be implemented on a pitch angle, a roll angle and an elevation speed of said drone (1).

13. A rotary-wing drone (1) **characterized in that** it comprises the system (3) for controlling according to claim 11.

14. Use of said drone (1) according to claim 12 for recording audio-visual data.

Figure 1

Figure 2

EP 2 960 154 A1

Figure 3

Figure 4

Europäisches
Patentamt

European
Patent Office

Office européen
des brevets

# EUROPEAN SEARCH REPORT

Application Number

EP 14 30 5973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 901 153 A1 (OFFIS E V [DE]) 19 March 2008 (2008-03-19) * Abstract * * figures 1.1-3.6 * * paragraphs [0043] - [0050], [0071] - [0073], [0093], [0172], [0202] - [0203], [0210] - [0211], [0221] - [0223], [0312] * ----- | 1-14 | INV. B64C27/08 G05D1/00 G05D1/08 G05D1/10 |
| A,D | US 2004/245378 A1 (NONAMI KENZO [JP] ET AL) 9 December 2004 (2004-12-09) * Abstact * * figures 1,3,11 * * paragraph [0096] * ----- | 1-14 | |
| A | US 2009/254229 A1 (NAKAMURA KATSU [JP]) 8 October 2009 (2009-10-08) * Abstact * * paragraphs [0005], [0025] - [0048] * * figure 1 * ----- | 1-14 | TECHNICAL FIELDS SEARCHED (IPC) B64C G05D |

The present search report has been drawn up for all claims

| Place of search | Date of completion of the search | Examiner |
|---|---|---|
| Munich | 23 October 2014 | Roberts, Neil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 30 5973

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2014

| Patent document cited in search report | | Publication date | Patent family member(s) | | Publication date |
|---|---|---|---|---|---|
| EP 1901153 | A1 | 19-03-2008 | NONE | | |
| US 2004245378 | A1 | 09-12-2004 | JP | 4133435 B2 | 13-08-2008 |
| | | | JP | 2004256022 A | 16-09-2004 |
| | | | US | 2004245378 A1 | 09-12-2004 |
| | | | US | 2006060694 A1 | 23-03-2006 |
| US 2009254229 | A1 | 08-10-2009 | CN | 101164025 A | 16-04-2008 |
| | | | KR | 20070112888 A | 27-11-2007 |
| | | | US | 2009254229 A1 | 08-10-2009 |
| | | | WO | 2006107017 A1 | 12-10-2006 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004245378 A1